# EUROPÄISCHE PATENTSCHRIFT

(11) **EP 1 238 958 B1**
(45) Veröffentlichungstag und Bekanntmachung des Hinweises auf die Patenterteilung: **22.10.2003**
(21) Anmeldenummer: 02003262.9
(22) Anmeldetag: 21.02.2002
(51) Int. Cl.: C04B 40/00, C04B 24/24, C04B 103/22

(54) **Trockenmörtel mit verbesserten Verarbeitungseigenschaften**
Dry mortar having improved processing properties
Mortier sec à maniabilité amélioré

(30) Priorität: 01.03.2001 DE 10109841; 22.03.2001 DE 10113978
(43) Veröffentlichungstag der Anmeldung: 11.09.2002
(73) Patentinhaber: Wacker Polymer Systems GmbH & Co. KG, 84489 Burghausen (DE); Brillux GmbH & Co. KG, 48163 Münster (DE)
(72) Erfinder: Jodlbauer, Franz, 84533 Marktl (DE); Asen, Felix, 5122 Ach (AT); Kugel, Manfred, 48653 Coesfeld (DE)
(74) Vertreter: Schuderer, Michael, Dr.

(56) Entgegenhaltungen:
- EP-A- 0 338 293
- EP-A- 0 894 822

## Beschreibung

Die Erfindung betrifft zementäre Trockenmörtel, welche mit einer Polymerpulver-Zusammensetzung modifiziert sind, sowie deren Verwendung als Klebemittel und Beschichtungsmittel.

Gemische aus Zement und in Wasser redispergierbaren Polymerpulvern (Redispersionspulver) sind bekannt. Das Redispersionspulver wird als organisches Bindemittel zugesetzt, um die Haftung zum Substrat und die Flexibilität der Schicht zu verbessern. Weitere Bestandteile dieser Mischungen sind Füllstoffe sowie Verdickungsmittel zur Steuerung der rheologischen Eigenschaften. Herkömmliche Zusatzstoffe sind noch Dispergierhilfsmittel, Zementverflüssiger sowie Zusätze zur Beschleunigung oder Verzögerung der Zementabbindung. Ein Beispiel für eine Mörtelgrundstoffmischung ist in der DE-A 1951171 angegeben.

Solche Gemische werden nach Anrühren mit Wasser beispielsweise in Bauklebern, Spachtelmassen, Armierungsmörtel für Wärmedämmverbundsysteme und als Klebstoffe zum Verkleben von Holzparkett eingesetzt. Solche Zusammensetzungen haben eine relativ kurze Topfzeit, welche je nach Anwendung vom Bruchteil einer Stunde bis zu mehreren Stunden reichen kann. Dies birgt den Nachteil, daß Mörtel, welche nicht rechtzeitig verarbeitet werden können, nicht mehr gebrauchsfertig sind und entsorgt werden müssen. Insbesondere bei der Verarbeitung von zementären Massen mittels Maschinen kann aufgrund der kurzen Topfzeit das Material vorzeitig in der Maschine erstarren und diese dadurch blockiert werden.

Zur Verzögerung der Abbindung von zementären Massen werden daher Verzögerer aus der Gruppe der Hydroxycarbonsäuren oder Dicarbonsäuren oder deren Salze, sowie Saccharide eingesetzt; beispielsweise Oxalsäure, Bernsteinsäure, Weinsäure, Gluconsäure, Zitronensäure, Sucrose, Glucose, Fructose, Sorbit, Pentaerythrit. Weitere Beispiele sind Polyphosphate, Metaphosphorsäure und Borax. Nachteilig ist dabei, daß mit diesen Verzögerern zwar die Zementmasse verarbeitbar bleibt, aber die Wasserfestigkeit nach Abbindung stark abnimmt.

Aus der EP-A 338293 ist bekannt, daß die Wirkungsweise von Zementverflüssigern auf Basis von Olefin-Maleinsäureanhydrid-Copolymeren durch Kombination mit Zinkoxid verbessert werden kann, da aufgrund Komplexbildung mit dem Zinkion die Bildung von unwirksamen, wasserlöslichen Olefin-Maleinsäure-Copolymeren verhindert wird.

Die EP-A 894822 betrifft vernetzbare, in Wasser redispergierbare Polymerpulver-Zusammensetzungen, welche ein funktionelles wasserunlösliches Polymerisat mit Aldehyd-, Keto-, Epoxy-, Isocyanat-, Carbonsäureanhydrid- oder Aziridin-Gruppen enthalten, sowie wasserlösliche Polymere, insbesondere Schutzkolloide, und einen in Salzform vorliegenden Vernetzer aus der Gruppe der Amine, Hydrazide, Hydroxylaminester, der Hydrazone und Hydrazine.

Der Erfindung lag die Aufgabe zugrunde, zementäre Mörtelmassen so zu modifizieren, daß deren Abbindung wirksam verzögert wird, ohne daß die Wasserfestigkeit der abgebundenen Zementmassen reduziert wird.

Gegenstand der Erfindung sind zementäre Trockenmörtel, enthaltend
a) 0.5 bis 80 Gew.-% Zement,
b) 0 bis 97 Gew.-% Füllstoffe,
c) 0 bis 3.5 Gew.-% Verdickungsmittel, dadurch gekennzeichnet, daß eine Polymerpulverzusammensetzung enthalten ist, mit
d) 1.0 bis 80 Gew.-% redispergierbares Polymerpulver,
e) 0.02 bis 4.0 Gew.-% ein oder mehrere Verbindungen aus der Gruppe umfassend Zinkoxid, Zinkhydroxid und Zinkhydroxidcarbonat,
f) 0 bis 30 Gew.-% Alkali- und/oder Erdalkalihydroxid,
jeweils bezogen auf das Gesamtgewicht des Trockenmörtels, wobei sich die Angaben in Gew.-% auf 100 Gew.-% aufaddieren.

Der Zementanteil a) beträgt vorzugsweise 0.5 bis 40 Gew.-%, besonders bevorzugt 8 bis 16 Gew.-%. Vorzugsweise wird Portland-Zement eingesetzt.

Geeignete Füllstoffe b) sind Quarzsand, Quarzmehl, Calciumcarbonat, Dolomit, Aluminiumsilicate, Talkum oder Glimmer, oder auch Leichtfüllstoffe wie Bims, Schaumglas, Gasbeton, Perlite oder Vermiculite. Es können auch Gemische der genannten Füllstoffe eingesetzt werden. Vorzugsweise beträgt der Füllstoffanteil 10 bis 90 Gew.-%, besonders bevorzugt 75 bis 90 Gew.-%.

Beispiele für Verdickungsmittel c) sind Polysaccharide wie Celluloseether und modifizierte Celluloseether, Stärkeether, Guar Gum oder Xanthan Gum, Schichtsilikate, Polycarbonsäuren wie Polyacrylsäure und deren Teilester, Polyvinylalkohole welche gegebenenfalls acetalisiert und/oder hydrophob modifiziert sein können, Casein und assoziativ wirkende Verdicker. Es können auch Gemische der genannten Verdickungsmittel eingesetzt werden. Bevorzugt werden die Celluloseether, die modifizierten Celluloseether, die Polyvinylalkohole welche gegebenenfalls acetalisiert und/oder hydrophob modifiziert sein können, sowie deren Gemische. Vorzugsweise werden 0.05 bis 2.5 Gew.-%, besonders bevorzugt 0.05 bis 0.5 Gew.-% Verdickungsmittel eingesetzt.

Als in Wasser redispergierbare Polymerpulver d) werden solche bezeichnet, die in Wasser wieder in die Primärteilchen zerfallen, welche dann im Wasser dispergiert werden. Geeignete Polymerisate sind solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide. Es können auch Gemische der genannten Polymere eingesetzt werden. Vorzugsweise werden 1 bis 10 Gew.-% in Wasser redispergierbare Polymerpulver d) eingesetzt.

Bevorzugte Vinylester sind Vinylacetat, Vinylpropionat, Vinylbutyrat, Vinyl-2-Ethylhexanoat, Vinyllaurat, 1-Methylvinylacetat, Vinylpivalat und Vinylester von alpha-verzweigten Monocarbonsäuren mit 5 bis 11 C-Atomen, beispielsweise VeoVa5^{R}, VeoVa9^{R} , VeoVa10^{R} oder VeoVa11^{R} (Handelsname der Fa. Shell). Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können die Polymerisate noch 0.1 bis 10 Gew.-%, bezogen auf das Gesamtgewicht des Polymerisats, funktionelle Comonomereinheiten enthalten aus der Gruppe der ethylenisch ungesättigten Mono- oder Dicarbonsäuren wie Acrylsäure; der ethylenisch ungesättigten Carbonsäureamide wie (Meth)Acrylamid, aus der Gruppe der ethylenisch ungesättigten Sulfonsäuren bzw. deren Salze, vorzugsweise Vinylsulfonsäure, aus der Gruppe der mehrfach ethylenisch ungesättigten Comonomeren, beispielsweise Divinyladipat, Diallylmaleat, Allylmethacrylat oder Triallylcyanurat und/oder aus der Gruppe der N-Methylol(meth)acrylamide sowie deren Ether wie Isobutoxy- oder n-Butoxyether.

Als Polymerisate werden die nachstehend aufgeführten besonders bevorzugt, wobei sich die Angaben in Gewichtsprozent, gegebenenfalls mit dem Anteil an funktionellen Comonomereinheiten, auf 100 Gew.-% aufaddieren:
Aus der Gruppe der Vinylester-Polymerisate Vinylacetat-Polymerisate, Vinylacetat-Ethylen-Copolymere mit einem Ethylengehalt von 1 bis 60 Gew.-%; Vinylester-Ethylen-Vinylchlorid-Copolymere mit einem Ethylengehalt von 1 bis 40 Gew.-% und einem Vinylchlorid-Gehalt von 20 bis 90 Gew.-%; VinylacetatCopolymere mit 1 bis 50 Gew.-% eines oder mehrerer copolymerisierbarer Vinylester wie Vinyllaurat, Vinylpivalat, Vinylester einer alpha-verzweigten Carbonsäure, insbesonders Versaticsäure-Vinylester (VeoVa9^{R}, VeoVa10^{R}, VeoVa11^{R}), welche gegebenenfalls noch 1 bis 40 Gew.-% Ethylen enthalten; Vinylacetat-Acrylsäureester-Copolymerisate mit 1 bis 60 Gew.-% Acrylsäureester, insbesonders n-Butylacrylat oder 2-Ethylhexylacrylat, welche gegebenenfalls noch 1 bis 40 Gew.-% Ethylen enthalten.

Aus der Gruppe der (Meth)acrylsäureesterpolymerisate Polymerisate von n-Butylacrylat oder 2-Ethylhexylacrylat; Copolymerisate von Methylmethacrylat mit n-Butylacrylat und/oder 2-Ethylhexylacrylat, Copolymerisate von Methylmethacrylat mit 1,3-Butadien.
Aus der Gruppe der Vinylchlorid-Polymerisate, neben den obengenannten Vinylester/Vinylchlorid/Ethylen-Copolymerisaten, Vinylchlorid-Ethylen-Copolymere und Vinylchlorid/Acrylat-Copolymere.
Aus der Gruppe der Styrol-Polymerisate Styrol-Butadien-Copolymere und Styrol-Acrylsäureester-Copolymere wie Styrol-n-Butylacrylat oder Styrol-2-Ethylhexylacrylat mit einem Styrol-Gehalt von jeweils 10 bis 70 Gew.-%.

Die Herstellung der Polymerisate erfolgt in an sich bekannter Weise, vorzugsweise nach dem Emulsionspolymerisationsverfahren. Es können sowohl mit Emulgator stabilisierte Dispersionen eingesetzt werden, als auch mit Schutzkolloid, beispielsweise Polyvinylalkohol, stabilisierte. Zur Herstellung der in Wasser redispergierbaren Polymerpulver wird die dadurch erhältliche Polymerdispersion getrocknet. Die Trocknung kann mittels Sprühtrocknung, Gefriertrocknung oder durch Koagulation der Dispersion und anschließender Wirbelschichttrocknung erfolgen. Bevorzugt wird die Sprühtrocknung.

Die Zinkverbindungen e) werden vorzugsweise in einer Menge von 0.02 bis 2 Gew.-%, besonders bevorzugt 0.05 bis 0.5 Gew.-% eingesetzt. Vorzugsweise wird Zinkoxid eingesetzt.

Als Komponente f) werden die Erdalkalihydroxide bevorzugt, insbesondere Calciumhydroxid. Vorzugsweise wird die Komponente f) in einer Menge von 0.1 bis 10 Gew.-%, besonders bevorzugt 0.1 bis 4 Gew.-% eingesetzt.

Am meisten bevorzugt werden Zusammensetzungen mit
a) 8 bis 16 Gew.-% Portlandzement,
b) 75 bis 90 Gew.-% ein oder mehrere Füllstoffe aus der Gruppe umfassend Calciumcarbonat und/oder Quarzsand,
c) 0.05 bis 0.5 Gew.-% ein oder mehrere Verdickungsmittel aus der Gruppe umfassend Celluloseether, modifizierte Celluloseether, Polyvinylalkohole, acetalisierte und/oder hydrophob modifizierte Polyvinylalkohole,
d) 1 bis 10 Gew.-% Redispersionspulver auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide,
e) 0.05 bis 0.5 Gew.-% Zinkoxid,
f) 0.1 bis 4 Gew.-% Calciumhydroxid.

Die Herstellung der Zusammensetzung erfolgt im allgemeinen so, daß die Komponenten a) bis f) in herkömmlichen Pulvermischvorrichtungen zu einem Trockenmörtel vermischt und homogenisiert werden. Die zur Verarbeitung zu Mörtelmassen erforderliche Menge Wasser wird vor der Verarbeitung hinzugefügt. Es kann auch so vorgegangen werden, daß die einzelnen Komponenten a) bis f) getrennt mit Wasser zu einer Mörtelmasse angerührt werden.

Es kann auch so vorgegangen werden, daß zur Herstellung der zementären Mörtelmassen ein konfektioniertes Redispersionspulver eingesetzt wird, welches ein oder mehrere Verbindungen e) aus der Gruppe umfassend Zinkoxid, Zinkhydroxid und Zinkhydroxicarbonat enthält und gegebenenfalls noch Verdickungsmittel c) und/oder gegebenenfalls noch Alkali- und/oder Erdalkalihydroxid. Vorzugsweise enthält das konfektionierte Redispersionspulver 0.5 bis 50 Gew.-% der Komponente e), 0 bis 200 Gew.-%, besonders bevozugt 1 bis 200 Gew.-% der Komponente f) und 0-50 Gew.-%, besonders bevozugt 0.5 bis 50 Gew.-% der Kompo-. nente c), jeweils bezogen auf den Gewichtsanteil des Redispersionspulvers.

Die damit erhältlichen zementären Mörtelmassen eignen sich als Klebemittel, vorzugsweise Bauklebemittel, insbesondere als Fliesenkleber und als Klebemittel zur Verklebung von Wärmedämmplatten und Schallschutzplatten. Weitere Anwendungen sind die als Armierungsmasse für Wärmedämmverbundsysteme, als Spachtelmasse, als Dichtungsschlämme und als Beschichtungsmasse (Putze). Die zementären Mörtelmassen eignen sich auch zum Verkleben von Holz und Holzwerkstoffen, beispielsweise mit Wärmedämmplatten.

Mit der erfindungsgemäßen Zusammensetzung erhält man zementäre Massen, welche im Gegensatz zur Verwendung von klassischen Verzögerern, über mehrere Tage verarbeitbar bleiben, ohne nach Aushärtung an Wasserfestigkeit zu verlieren. Dieser Effekt läßt sich bei Mitverwendung von Ca-Hydroxid noch weiter steigern.

Die nachfolgenden Beispiele dienen der weiteren Erläuterung der Erfindung:

Die anwendungstechnischen Eigenschaften wurden mit folgender Rezeptur getestet:

| | |
|---|---|
| 24.4 Gew.-Teile | Weißzement (CEM I 52.5 R) (a) |
| 34.7 Gew.-Teile | Calciumcarbonat (Omyacarb 40-GU) (b) |
| 33.6 Gew.-Teile | Calciumcarbonat (Omyacarb 130-BG) (b) |
| 97.7 Gew.-Teile | Quarzsand (HR 81 T) (b) |
| 0.3 Gew.-Teile | Celluloseether (Walocel MKX 25000PF 25 L) (c) |
| 8.0, Gew.-Teile | Redispersionspulver (d) |
| 0.3 Gew.-Teile | Zinkoxid (e) |
| 1.0 Gew.-Teile | Calciumhydroxid (f) |

Diese Trockenmischung wurde jeweils mit 24 Gew.-% Wasser, bezogen auf das Gesamtgewicht der Trockenmischung, angerührt.

### Aushärtung:

Zur Beurteilung der Aushärtung wurde der Mörtel in einen 100 ml Plastikbecher gefüllt, der mit einem Deckel verschlossen wurde. Anschließend wurde ein Tag bzw. zwei Tage bei Raumtemperatur gelagert, und dann geprüft, ob sich das Material durch Aufspachteln noch verarbeiten ließ.

Die Aushärtung der Schicht wurde qualitativ beurteilt: 0 = ausgehärtet; 1 = erstarrt, aber nicht ausgehärtet; 2 = nach Aufrühren noch verarbeitbar; 3 = gut verarbeitbar; 4 = ausgezeichnet verarbeitbar.
Die Meßergebnisse sind in den Tabellen 1 und 2 angegeben.

### Wasserfestigkeit:

Der Mörtel wurde in einer Schichtdicke von 2 mm auf eine Trägerplatte aus Polystyrolpartikelschaum aufgetragen. Anschließend wurde 28 Tage bei Raumtemperatur gelagert. Dann wurden mit einer Pipette an mehreren Stellen 2 ml Wasser aufgetragen und eine Stunde einwirken gelassen.
Die Wasserfestigkeit wurde durch Kratzen an den befeuchteten Stellen qualitativ beurteilt:
1 = schlecht, 2 = ausreichend, 3 = gut, 4 = ausgezeichnet Die Meßergebnisse sind in den Tabellen 1 und 2 angegeben.

### Bestimmung der Haftzugfestigkeit:

Zur Bestimmung der Haftzugfestigkeit wurde der Mörtel 3 mm dick mit der Traufel und einer 5 × 5 cm² Schablone auf Polystyrolpartikelschaum aufgespachtelt. Anschließend wurde 11 Tage bei Normklima (DIN 50014, 23°C, 50 % Luftfeuchte)gelagert. Nach der Lagerung wurden mit Epoxidkleber auf die Proben Metallplatten aufgeklebt, die als Zuganker für die Messungen dienten. Danach wurden die Proben jeweils 48 Stunden in Wasser gelagert. Die Haftzugswerte wurden mit einem Abzugsgerät der Fa. Herion bestimmt. Die Meßwerte in N/mm² sind in den Tabellen 1 und 2 angegeben und stellen einen Mittelwert aus 3 Messungen dar.

Folgende Redispersionspulver wurden getestet:
Pulver a:
Mischung aus einem Polyvinylalkohol-stabilisiertem Vinylacetat-Ethylen-Copolymer-Pulver mit MFT=0°C (RE5044N) und einem Polyvinylalkohol-stabilisiertem Vinylchlorid-Ethylen-Vinyllaurat-Copolymer-Pulver mit MFT=0°C (RI554Z) im Gewichtsverhältnis 2 : 1
Pulver b:
Polyvinylalkohol-stabilisiertes Vinylacetat-Ethylen-Copolymer-Pulver mit MFT=0°C (RE5044N)
Pulver c:
Polyvinylalkohol-stabilisiertes Vinylacetat-Ethylen-Copolymer-Pulver mit MFT=0°C (RE545Z)
Pulver d:
Polyvinylalkohol-stabilisiertes Vinylacetat-Vinylester-Ethylen-Copolymer-Pulver mit MFT=2°C (RE5034N)
Pulver e:
Polyvinylalkohol-stabilisiertes Vinylacetat-VeoVa-Vinyllaurat-Copolymer-Pulver mit MFT=4°C (RI538Z)
Pulver f:
Polyvinylalkohol-stabilisiertes Butylacrylat-Methylmethacrylat-Copolymer-Pulver (LL5315)

**Tabelle 1:**

| Pulver | a | b | c | d | e | f | a* | a** | a*** |
|---|---|---|---|---|---|---|---|---|---|
| Haftzug N/mm² | 0.06 | 0.07 | 0.07 | 0.06 | 0.04 | 0.04 | 0.06 | 0.07 | 0.07 |
| Aushärtung 1d | 2.0 | 2.75 | 3.0 | 3.0 | 2.25 | 2.0 | 1.75 | 0 | 1.75 |
| Aushärtung 2d | 1.75 | 2.0 | 2.5 | 2.5 | 2.0 | 1.25 | 1.25 | 0 | 1.5 |
| H2O-Festigkeit | 2.5 | 2.75 | 2.5 | 2.5 | 2.5 | 2.25 | 2.0 | 3.0 | 2.0 |

| | | | | | | | | | |
|---|---|---|---|---|---|---|---|---|---|
| a* = Pulver a, aber ohne Ca-Hydroxid | | | | | | | | | |
| a** = Pulver a, aber ohne Zinkoxid | | | | | | | | | |
| a*** = Pulver a, aber mit Zinkhydroxidcarbonat | | | | | | | | | |

Der Vergleich von a mit a* zeigt den Synergieeffekt der Kombination der Komponenten e) und f): Bei Kombination der beiden Komponenten erhält man eine deutliche Verbesserung bezüglich Aushärteverzögerung und Wasserfestigkeit.

Der Versuch mit Pulver a** zeigt, daß man mit Komponente f) alleine zwar gute Haftfestigkeit und Wasserfestigkeit erhält, die Aushärtung aber nicht retardiert wird.

Zum Vergleich der anwendungstechnischen Eigenschaften der erfindungsgemäßen Kombination mit Mörteln, welche mit herkömmlichen Verzögerern modifiziert wurden, wurde folgende Rezeptur eingesetzt. Die Testung erfolgte analog der oben genannten Methoden.

| | |
|---|---|
| 24.4 Gew.-Teile | Weißzement (CEM I 52.5 R) (a) |
| 34.5 Gew.-Teile | Calciumcarbonat (Omyacarb 40-GU) (b) |
| 33.5 Gew.-Teile | Calciumcarbonat (Omyacarb 130-BG) (b) |
| 97.4 Gew.-Teile | Quarzsand (HR 81 T) (b) |
| 0.3 Gew.-Teile | Celluloseether (Walocel MKX 25000PF 26 L) (c) |
| 8.0 Gew.-Teile | Redispersionspulver (Pulvermischung a) (d) |
| 0.4 Gew.-Teile | Verzögerer |
| 1.5 Gew.-Teile | Calciumhydroxid (f) |

Diese Trockenmischung wurde jeweils mit 24 Gew.-% Wasser, bezogen auf das Gesamtgewicht der Trockenmischung, angerührt.

Die Testergebnisse sind in Tabelle 2 zusammengefaßt:
Die Testergebnisse zeigen, daß ohne Verzögerer die Masse sofort aushärtet.
Mit Verzögerer wird die Aushärtung retardiert, wobei mit Zinkoxid zumindest ähnliche Verzögerung bewirkt wird, wie mit herkömmlichen Verzögerern.
Im Gegensatz zu herkömmlichen Verzögerern bleiben mit Zinkoxid allerdings die Haftzugsfestigkeit und die Wasserfestigkeit erhalten.

**Tabelle 2:**

| Verzögerer | ohne | Zinkoxid | Weinsäure | Citronensäure | Tri-Na-Citrat |
|---|---|---|---|---|---|
| Haftzug N/mm2 | 0.07 | 0.07 | 0.04 | 0.03 | 0.04 |
| Härtung 1 d | 0 | 2.75 | 3.25 | 2.75 | 2.75 |
| Härtung 4 d | 0 | 2.5 | 3.0 | 2.0 | 2.5 |
| H₂O-Festigkeit | 3.0 | 2.5 | 1.25 | 1.25 | 1.25 |

## Patentansprüche

1. Zementäre Trockenmörtel, enthaltend
a) 0.5 bis 80 Gew.-% Zement,
b) 0 bis 97 Gew.-% Füllstoffe,
c) 0 bis 3.5 Gew.-% Verdickungsmittel, **dadurch gekennzeichnet, daß** eine Polymerpulverzusammensetzung enthalten ist, mit
d) 1.0 bis 80 Gew.-% redispergierbares Polymerpulver,
e) 0.02 bis 4.0 Gew.-% ein oder mehrere Verbindungen aus der Gruppe umfassend Zinkoxid, Zinkhydroxid und Zinkhydroxidcarbonat,
f) 0 bis 30 Gew.-% Alkali- und/oder Erdalkalihydroxid, jeweils bezogen auf das Gesamtgewicht des Trockenmörtels, wobei sich die Angaben in Gew.-% auf 100 Gew.-% aufaddieren.

2. Zementäre Trockenmörtel nach Anspruch 1, **dadurch gekennzeichnet, daß** als in Wasser redispergierbare Polymerpulver d) solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide enthalten sind.

3. Zementäre Trockenmörtel nach Anspruch 1 oder 2, **dadurch gekennzeichnet, daß** als Komponente f) 0.1 bis 10 Gew.-% Erdalkalihydroxide enthalten sind.

4. Zementäre Trockenmörtel nach Anspruch 3, **dadurch gekennzeichnet, daß** als Komponente f) Calciumhydroxid enthalten ist.

5. Zementärer Trockenmörtel nach Anspruch 1 mit
a) 8 bis 16 Gew.-% Portlandzement,
b) 75 bis 90 Gew.-% ein oder mehrere Füllstoffe aus der Gruppe umfassend Calciumcarbonat und/oder Quarzsand,
c) 0.05 bis 0.5 Gew.-% ein oder mehrere Verdickungsmittel aus der Gruppe umfassend Celluloseether, modifizierte Celluloseether, Polyvinylalkohole, acetalisierte und/oder ' hydrophob modifizierte Polyvinylalkohole,
d) 1 bis 10 Gew.-% Redispersionspulver auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 10 C-Atomen, Vinylaromaten, Olefine, Diene und Vinylhalogenide,
e) 0.05 bis 0.5 Gew.-% Zinkoxid,
f) 0.1 bis 4 Gew.-% Calciumhydroxid.

6. Verfahren zur Herstellung von zementären Trockenmörteln gemäß Anspruch 1 bis 5 mittels Vermischen der Komponenten a) bis f) in herkömmlichen Pulvermischvorrichtungen.

7. Verfahren zur Herstellung von zementären Mörtelmassen mittels Vermischen der Komponenten a) bis f) in herkömmlichen Pulvermischvorrichtungen zu einem Trockenmörtel gemäß Anspruch 6, und Zugabe der zur Verarbeitung erforderlichen Menge Wasser, wobei gegebenenfalls einzelne Komponenten auch erst nachträglich zu der mit Wasser angerührten Mischung zugegeben werden.

8. Verfahren zur Herstellung von zementären Mörtelmassen bei dem die einzelnen, in Anspruch 1 genannten, Komponenten a) bis f) getrennt mit Wasser zu einer Mörtelmasse angerührt werden.

9. Verfahren zur Herstellung von zementären Mörtelmassen, aus einem Trockenmörtel gemäß Anspruch 1, bei dem zur Herstellung der zementären Mörtelmassen ein konfektioniertes Redispersionspulver eingesetzt wird, welches ein oder mehrere Verbindungen e) aus der Gruppe umfassend Zinkoxid, Zinkhydroxid und Zinkhydroxicarbonat enthält und gegebenenfalls noch Verdickungsmittel c) und/oder gegebenenfalls noch Alkali- und/oder Erdalkalihydroxid.

10. Verwendung der zementären Trockenmörtel gemäß Anspruch 1 bis 5 als Klebemittel oder Beschichtungsmasse.

11. Verwendung gemäß Anspruch 10 als Fliesenkleber.

12. Verwendung gemäß Anspruch 10 als Klebemittel zur Verklebung von Wärmedämmplatten und Schallschutzplatten.

13. Verwendung gemäß Anspruch 10 als Armierungsmasse für Wärmedämmverbundsysteme.

14. Verwendung gemäß Anspruch 10 als Spachtelmasse.

15. Verwendung gemäß Anspruch 10 als Dichtungsschlamm.

16. Verwendung gemäß Anspruch 10 als Klebemittel zum Verkleben von Holz und Holzwerkstoffen.

## Claims

1. Cementitious dry mortar comprising
a)from 0.5 to 80% by weight of cement,
b)from 0 to 97% by weight of fillers,
c)from 0 to 3.5% by weight of thickeners, **characterized in that** a polymer powder composition is present, with
d)from 1.0 to 80% by weight of redispersible polymer powder,
e)from 0.02 to 4.0% by weight of one or more compounds from the group consisting of zinc oxide, zinc hydroxide, and zinc hydroxide carbonate,
f)from 0 to 30% by weight of alkali metal hydroxide and/or alkaline earth metal hydroxide,
based in each case on the overall weight of the dry mortar, the percentages by weight adding up to 100% by weight.

2. Mortar according to Claim 1, **characterized in that** it comprises as water-redispersible polymer powders d) those based on one or more monomers from the group of vinyl esters of unbranched or branched alkylcarboxylic acids having from 1 to 15 carbon atoms, methacrylic esters and acrylic esters of alcohols having from 1 to 10 carbon atoms, vinylaromatics, olefins, dienes, and vinyl halides.

3. Mortar according to Claim 1 or 2, **characterized in that** it comprises as component f) from 0.1 to 10% by weight of alkaline earth metal hydroxides.

4. Mortar according to Claim 3, **characterized in that** it comprises as component f) calcium hydroxide.

5. Cementitious dry mortar according to Claim 1 comprising
a)from 8 to 16% by weight of Portland cement,
b)from 75 to 90% by weight of one or more fillers from the group consisting of calcium carbonate and/or quartz sand,
c)from 0.05 to 0.5% by weight of one or more thickeners from the group consisting of cellulose ethers, modified cellulose ethers, polyvinyl alcohols, acetalized and/or hydrophobically modified polyvinyl alcohols,
d)from 1 to 10% by weight of redispersible powders based on one or more monomers from the group consisting of vinyl esters of unbranched or branched alkylcarboxylic acids having from 1 to 15 carbon atoms, methacrylic esters and acrylic esters of alcohols having from 1 to 10 carbon atoms, vinylaromatics, olefins, dienes, and vinyl halides,
e)from 0.05 to 0.5% by weight of zinc oxide,
f)from 0.1 to 4% by weight of calcium hydroxide.

6. Process for preparing a mortar according to any of Claims 1 to 5 by mixing components a) to f) in conventional powder mixers.

7. Process for preparing a mortar by mixing components a) to f) to a dry mortar according to Claim 6 in conventional powder mixers and adding the amount of water required for processing, with individual components also being added, if desired, only subsequently to the mixture stirred up with water.

8. Process for preparing cementitious mortar compounds wherein the individual components a) to f) mentioned in Claim 1 are stirred up separately with water to give a mortar compound.

9. Process for preparing cementitious mortar compounds from a dry mortar according to Claim 1 using a formulated redispersible powder comprising one or more compounds e) from the group consisting of zinc oxide, zinc hydroxide, and zinc hydroxycarbonate and also, if desired, thickeners c) and/or, if desired, alkali metal hydroxide and/or alkaline earth metal hydroxide.

10. Use of a mortar according to any of Claims 1 to 5 as an adhesive or coating compound.

11. Use according to Claim 10 as a tile adhesive.

12. Use according to Claim 10 as an adhesive for bonding insulation panels and soundproofing panels.

13. Use according to Claim 10 as a reinforcing compound for exterior insulation and finish systems.

14. Use according to Claim 10 as a trowelling compound.

15. Use according to Claim 10 as a grout.

16. Use according to Claim 10 as an adhesive for bonding wood and wood materials.

## Revendications

1. Mortier sec à base de ciment, contenant
a) 0,5 à 80 % en poids de ciment,
b) 0 à 97 % en poids de charges,
c) 0 à 3,5 % en poids d'épaississant, **caractérisé en ce qu'**est contenue une composition de poudre de polymère comportant
d) 1,0 à 80 % en poids de poudre de polymère redispersable,
e) 0,02 à 4,0 % en poids d'un ou plusieurs composés choisis dans le groupe comprenant l'oxyde de zinc, l'hydroxyde de zinc et l'hydroxycarbonate de zinc,
f) 0 à 30 % en poids d'hydroxyde de métal alcalin et/ou alcalino-terreux, dans chaque cas par rapport au poids total du mortier sec, les données en % en poids faisant au total 100 % en poids.

2. Mortier sec à base de ciment selon la revendication 1, **caractérisé en ce qu'**en tant que poudre de polymère d) redispersable dans l'eau, il contient celles à base d'un ou plusieurs monomères choisis dans le groupe comprenant les esters vinyliques d'acides alkylcarboxyliques ramifiés ou non ramifiés ayant de 1 à 15 atomes de carbone, les esters d'acide méthacrylique et les esters d'acide acrylique avec des alcools ayant de 1 à 10 atomes de carbone, les composés vinylaromatiques, les oléfines, les diènes et les halogénures de vinyle.

3. Mortier sec à base de ciment selon la revendication 1 ou 2, **caractérisé en ce que** 0,1 à 10 % en poids d'hydroxydes de métaux alcalino-terreux sont contenus en tant que composant f).

4. Mortier sec à base de ciment selon la revendication 3, **caractérisé en ce que** de l'hydroxyde de calcium est contenu en tant que composant f).

5. Mortier sec à base de ciment selon la revendication 1, comportant
a) 8 à 16 % en poids de ciment Portland,
b) 75 à 90 % en poids d'une ou plusieurs charges choisies dans le groupe comprenant le carbonate de calcium et/ou le sable quartzeux,
c) 0,05 à 0,5 % en poids d'un ou plusieurs épaississants choisis dans le groupe comprenant les éthers de cellulose, les éthers de cellulose modifiés, les poly(alcool vinylique)s les poly(alcool vinylique)s acétalisés et/ou à modification hydrophobe,
d) 1 à 10 % en poids de poudre redispersable, à base d'un ou plusieurs monomères choisis dans le groupe comprenant les esters vinyliques d'acides alkylcarboxyliques ramifiés ou non ramifiés ayant de 1 à 15 atomes de carbone, les esters d'acide méthacrylique et les esters d'acide acrylique avec des alcools ayant de 1 à 10 atomes de carbone, les composés vinylaromatiques, les oléfines, les diènes et les halogénures de vinyle,
e) 0,05 à 0,5 % en poids d'oxyde de zinc,
f) 0,1 à 4 % en poids d'hydroxyde de calcium.

6. Procédé pour la préparation de mortiers secs à base de ciment selon l'une quelconque des revendications 1 à 5, par mélange des composants a) à f) dans des dispositifs classiques de mélange de poudres.

7. Procédé pour la préparation de masses de mortier à base de ciment par mélange des composants a) à f) dans des dispositifs classiques de mélange de poudres, pour l'obtention d'un mortier sec selon la revendication 6, et addition de la quantité d'eau requise pour la mise en oeuvre, des composants individuels n'étant éventuellement ajoutés qu'ultérieurement au mélange délayé avec de l'eau.

8. Procédé pour la préparation de masses de mortier à base de ciment, dans lequel les composant individuels
a) à f) mentionnés dans la revendication 1 sont délayés séparément avec de l'eau en une masse de mortier.

9. Procédé pour la préparation de masses de mortier sec à base de ciment, à partir d'un mortier sec selon la revendication 1, dans lequel on utilise pour la préparation des masses de mortier à base de ciment une poudre redispersable conditionnée qui contient un ou plusieurs composés e) choisis dans le groupe comprenant l'oxyde de zinc, l'hydroxyde de zinc et l'hydroxycarbonate de zinc et éventuellement encore un épaississant c) et/ou éventuellement encore un hydroxyde de métal alcalin et/ou alcalino-terreux.

10. Utilisation du mortier sec à base de ciment selon l'une quelconque des revendications 1 à 5, en tant qu'adhésif ou matière de revêtement.

11. Utilisation selon la revendication 10, en tant que colle pour carreaux.

12. Utilisation selon la revendication 10, en tant qu'adhésif pour le collage de plaques d'isolation thermique et de plaques d'insonorisation.

13. Utilisation selon la revendication 10, en tant que matière d'armature pour des systèmes composites d'isolation thermique.

14. Utilisation selon la revendication 10, en tant que mastic.

15. Utilisation selon la revendication 10, en tant que suspension d'étanchéité.

16. Utilisation selon la revendication 10, en tant qu'adhésif pour le collage du bois et de matériaux à base de bois.
